# EUROPÄISCHE PATENTSCHRIFT

(11) **EP 1 067 773 B1**
(45) Veröffentlichungstag und Bekanntmachung des Hinweises auf die Patenterteilung: **27.09.2006**
(21) Anmeldenummer: 00113540.9
(22) Anmeldetag: 27.06.2000
(51) Int. Cl.: H04N 5/04

(54) **Bild- und Tonwiedergabegerät und Verfahren für dessen Betrieb**
Device for reproducing pictures and sound and operation method therefor
Dispositif de reproduction d'images et de son et procédé pour son opération

(30) Priorität: 03.07.1999 DE 19930824
(43) Veröffentlichungstag der Anmeldung: 10.01.2001
(73) Patentinhaber: Grundig Multimedia B.V., 1083HJ Amsterdam (NL)
(72) Erfinder: Kays, Rüdiger, c/o Grundig AG, 90762 Fürth (DE); Köchel, Matthias, c/o Grundig AG, 90762 Fürth (DE); Stracke, Jürgen, c/o Grundig AG, 90762 Fürth (DE); Valek, Thomas, c/o Grundig AG, 90762 Fürth (DE)
(74) Vertreter: Pröll, Jürgen

(56) Entgegenhaltungen:
- DE-A- 4 309 650
- GB-A- 2 273 215
- US-A- 4 703 355
- US-A- 5 467 139
- US-A- 5 668 601
- US-A- 6 018 376

## Beschreibung

Die vorliegende Erfindung betrifft ein Bild- und Tonwiedergabegerät und ein Verfahren für dessen Betrieb, insbesondere mit einem flachen Bildwiedergabegerät, wie z. B. einer Plasma- oder LC-Anzeige.

Für moderne Bild- und Tonwiedergabegeräte mit flachen Bildschirmen, wie Plasma- oder LC-Anzeigen, sind aufwendige Signalverarbeitungsschaltungen und Ansteuerschaltungen nötig, die teilweise zu beträchtlichen zeitlichen Verzögerungen des wiederzugebenden Bildsignals führen. Werden derartige flache Bildschirme vor allem zur Wiedergabe von Fernseh- oder Videosignalen verwendet, kommt es durch die zeitliche Verzögerung des Bildsignals zu einer nichtsynchronen Wiedergabe von Bild und Ton. Eine derartige Nichtsynchronität von Bild und Ton wird aber von Zuschauern als besonders störend empfunden.

Es ist daher Aufgabe der vorliegenden Erfindung, ein Bild- und Tonwiedergabegerät, insbesondere mit einem flachen Bildschirm, anzugeben, bei dem eine nichtsynchrone Wiedergabe von Bild und Ton vermieden wird.

Aus US-5,668,601-A1 ist ein MPEG-Decodier-System zum Decodieren eines Multiplex-System-Datenstroms von Audio- und Videodatenströmen mit Audio- und Videozeitstempeln und einer Systemtaktreferenz offenbart. Das System weist einen Demultiplexer auf, welcher einen Analysator beinhaltet, um die Audio- und Videodatenströme, die Audio- und Videozeitstempel und die Systemtaktreferenz aus dem Systemdatenstrom entnehmen. Im Weiteren ist eine Audio-Verzögerungseinheit vorgesehen, um den Audiodatenstrom zu decodieren und anhand von vordefinierten, in der Fertigung festgestellten Parametern, zu verzögern, um eine Lippensynchronisation zwischen Audio- und Videodaten zu erhalten.

Bei der vorliegenden Erfindung wird diese Aufgabe durch die Merkmale nebengeordneten Ansprüche gelöst.

Bei dem erfindungsgemäßen Bild- und Tonwiedergabegerät wird dabei von der Überlegung ausgegangen, zeitliche Verzögerungen in der Verarbeitung von Bild- und Tonsignal auszugleichen. Dies wird durch eine zeitliche Verzögerung des Signals erreicht, dessen Verarbeitung einen kürzeren Zeitraum benötigt, wobei die Verzögerung der Differenz zwischen längerem und kürzerem Verarbeitungszeitraum der Signale entspricht.

Der Vorteil des erfindungsgemäßen Verfahrens bzw. des erfindungsgemäßen Bild- und Tonwiedergabegeräts ist darin zu sehen, daß durch den Ausgleich der bei der Signalverarbeitung entstehenden, unterschiedlichen Zeitverzögerung der wiederzugebenden Bild- und Tonsignale eine nichtsynchrone Wiedergabe von Bild- und Tonsignal vermieden wird.

In einer besonderen Ausgestaltung der Erfindung, bei der die zeitlichen Verzögerungen bei der Verarbeitung von Bild- und Tonsignal ermittelt werden, weisen das Verfahren bzw. das Bild- und Tonwiedergabegerät den Vorteil auf, automatisch, aufgrund der ermittelten Verzögerungen, auftretende Nichtsynchronitäten bei der Wiedergabe zu vermeiden.

Weitere Vorteile der vorliegenden Erfindung ergeben sich aus den abhängigen Ansprüchen sowie der nachfolgenden Beschreibung eines Ausführungsbeispiels eines erfindungsgemäßen Bild- und Tonwiedergabegeräts anhand von Figuren.

Es zeigt:
- Fig. 1: ein Prinzipschaltbild eines Ausführungsbeispiels eines erfindungsgemäßen Bild- und Tonwiedergabegeräts,
- Fig. 2: einen Bestandteil der Bildsignalverarbeitung des in Fig. 1 dargestellten Bild- und Tonwiedergabegeräts, und
- Fig. 3: einen Bestandteil der Tonsignalverarbeitung des in Fig. 1 dargestellten Bild- und Tonwiedergabegeräts.

Zur Erleichterung des Verständnisses der vorliegenden Erfindung sind in den Figuren nur die Bestandteile des Ausführungsbeispiels dargestellt, die im Zusammenhang mit der Erfindung von Bedeutung sind. Gleiche Bestandteile in den Figuren weisen gleiche Bezugszeichen auf.

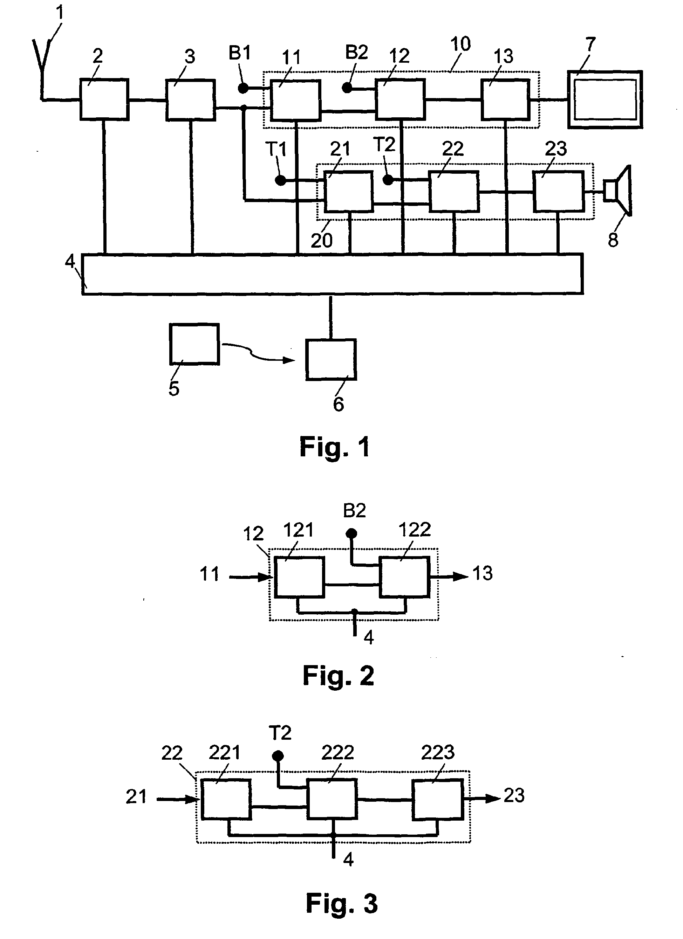

Figur1 zeigt ein Ausführungsbeispiel eines erfindungsgemäßen Bild- und Tonwiedergabegeräts, beispielsweise einen Fernsehempfänger mit einem flachen Bildwiedergabegerät 7, z. B. einer Plasma- oder LC-Anzeige. Der Fernsehempfänger weist außerdem einen Tuner 2, zum Empfang von Hochfrequenzsignalen, z. B. über eine Antenne 1, auf. Der Ausgang des Tuners 2 ist mit einer Zwischenfrequenzschaltung 3 verbunden, deren Ausgangssignal einer Bildverarbeitungseinrichtung 10 und einer Tonverarbeitungseinrichtung 20 zugeführt wird. Die Bildverarbeitungseinrichtung 10 weist einen Demodulator und Decoder 11, eine Bildsignalverarbeitung 12 und eine Ansteuerung 13 auf, wobei die Ansteuerung 13 zur Ansteuerung des Bildwiedergabegeräts 7 mit dem von der Bildsignalverarbeitung 12 stammenden Bildsignal für die Wiedergabe dient. Die Tonverarbeitungseinrichtung 20 weist einen Demodulator und Decoder 21, eine Tonsignalverarbeitung 22 und einen Verstärker 23 auf, wobei der Verstärker 23 zur Verstärkung des von der Tonsignalverarbeitung 22 stammenden Tonsignls für die Wiedergabe mit einem oder mehreren Lautsprechern 8 dient. Bei dem Tonsignal kann es sich insbesondere auch um ein Stereosignal handeln. Die Bestandteile des Fernsehempfängers werden von einer Steuereinrichtung 4, beispielsweise einem Mikrocomputer, der einen Mikroprozessor sowie einen flüchtigen und nichtflüchtigen Speicher umfaßt, gesteuert. An die Steuereinrichtung 4 ist außerdem ein Fernbedienungsempfänger 6 angeschlossen, der die Signale eines Fernbedienungsgebers 5 auswertet. Mittels des Fernbedienungsgebers 5 kann das Fernsehgerät von einem Benutzer gesteuert werden. Auf die Funktion der einzelnen Bestandteile des Fernsehgeräts wird nachfolgend nicht weiter eingegangen, weil sie im Zusammenhang mit der vorliegenden Erfindung nicht von Bedeutung sind und darüber hinaus an sich bekannt sind.

Figur 2 zeigt eine Ausführungsform der Bildsignalverarbeitung 12. Das vom Demodulator und Decoder 11 stammende Bildsignal wird von einem Analog/Digital-Wandler 121 in ein digitales Signal gewandelt und in einen Speicher 122 eingeschrieben. Der Ausgang des Speichers 122 ist zur weiteren Verarbeitung des Bildsignals mit der Ansteuerung 13 verbunden, welche das Bildsignal für die Darstellung auf dem Bildwiedergabegerät 7 aufbereitet. Analog/Digital-Wandler 121 und Speicher 122 werden von der Steuereinrichtung 4 gesteuert.

Figur 3 zeigt eine Ausführungsform der Tonsignalverarbeitung 22. Das vom Demodulator und Decoder 21 stammende Tonsignal wird von einem Analog/Digital-Wandler 221 in ein digitales Signal gewandelt und in einem Speicher 222 eingeschrieben. Zur Rückwandlung des digitalen Tonsignals ist ein Digital/Analog-Wandler 223 vorhanden, dessen Ausgang zur weiteren Verarbeitung des Tonsignals mit dem Verstärker 23 verbunden ist.
Analog/Digital-Wandler 221, Speicher 222 und Digital/Analog-Wandler 223 werden von der Steuereinrichtung 4 gesteuert.

Treten bei der Wiedergabe von Bild- und Tonsignal störende Nichtsynchronitäten auf, kann der Benutzer mittels des Fernbedienungsgebers 5 eine besonderen Bedienmodus aufrufen, in dem es möglich ist, z. B. das Tonsignal zeitlich zu verzögern, so daß die störende Nichtsynchronität verschwindet. Dazu kann das Tonsignal stufenlos oder in vorgegebenen Schritten, z. B. 1 ms, um eine bestimmte Zeitdauer zeitlich verzögert werden. Diese Verzögerung wird durch die Steuereinrichtung 4 bewirkt, indem der Auslesevorgang aus dem das Tonsignal enthaltenden Speicher 222 entsprechend verzögert wird. Ebenso kann ein weiterer Bedienmodus vorgesehen sein, der es erlaubt, das Bildsignal zeitlich zu verzögern. In diesem Fall wird der Auslesevorgang aus dem das Bildsignal enthaltenden Speicher 122 durch die Steuereinrichtung 4 verzögert.

Nichtsynchronitäten können auch vermieden werden, wenn bei der Herstellung des Fernsehgeräts die unterschiedlichen Verarbeitungszeiten für das Bild- und Tonsignal ermittelt werden und die so festgestellte zeitliche Differenz dadurch berücksichtigt wird, daß das Signal dessen Verarbeitung weniger Zeit in Anspruch nimmt um die festgestellte zeitliche Differenz verzögert wird. Dazu wird ein entsprechender Zeitwert im nichtflüchtigen Speicher der Steuereinrichtung 4 gespeichert und beim Auslesevorgang des Bild- bzw. Tonsignals aus Speicher 122 bzw. Speicher 222 berücksichtigt.

Für den Fall, daß, wie in Figur 1 gezeigt, Bild- bzw. Tonsignal an verschiedenen Stellen B1, B2 bzw. T1, T2 eingespeist werden können oder von der Zwischenfrequenzschaltung 3 stammen, ist es vorteilhaft, wenn durch die Steuereinrichtung 4 ermittelt wird, an welcher Stelle B1 oder B2 bzw. T1 oder T2 das Bild- bzw. Tonsignal tatsächlich eingespeist werden oder ob sie von der Zwischenfrequenzschaltung 3 stammen. Die verschiedenen Stellen B1, B2 bzw. T1, T2 für Bild- bzw. Tonsignal dienen der Darstellung von Bild- bzw. Tonsignalen, die von unterschiedlichen Signalquellen wie Videorecorder, DVD-Wiedergabegerät usw. stammen können, und somit z. B. in analoger oder digitaler Form vorliegen, Im nichtflüchtigen Speicher der Steuereinrichtung 4 ist die jeweilige Zeitdauer der Signalverarbeitung der einzelnen Bestandteile von Bildverarbeitungseinrichtung 10 und Tonverarbeitungseinrichtung 20 abgelegt. Für die Bildverarbeitungseinrichtung 10 ist die Zeitdauer der Signalverarbeitung von Demodulator und Decoder 11, von Bildsignalverarbeitung 12 (Analog/Digital-Wandler 121 und Speicher 122) sowie von Ansteuerung 13 abgelegt. Für die Tonverarbeitungseinrichtung 20 ist die Zeitdauer der Signalverarbeitung von Demodulator und Decoder 21, Tonsignalverarbeitung 22 (Analog/Digital-Wandler 221, Speicher 222 und Digital/Analog-Wandler 223) sowie Verstärker 23 abgelegt. Wird das Bildsignal beispielsweise an der Stelle B2 eingespeist, setzt sich die Verarbeitungszeit des Bildsignals aus der Zeitdauer der Signalverarbeitung von Speicher 122 und Ansteuerung 13 zusammen. Wird das zugehörige Tonsignal beispielsweise an der Stelle T1 eingespeist, setzt sich die Verarbeitungszeit des Tonsignals aus der Zeitdauer der Signalverarbeitung von Demodulator und Decoder 21, Tonsignalverarbeitung 22 und Verstärker 23 zusammen. Für die derart ermittelten Verarbeitungszeiten von Bild- und Tonsignal wird von der Steuereinrichtung 4 die Differenz gebildet und entsprechend der sich ergebenden Differenz wird das Signal mit der um die Differenz kürzeren Verarbeitungszeit verzögert. Die Verzögerung kann, wie oben beschrieben, durch die Beeinflussung des Auslesevorgangs der Speicher 122 bzw. 222 für Bild- bzw. Tonsignal durch die Steuereinrichtung 4 erreicht werden.

Um unabhängig von vorab ermittelten Werten für die Verarbeitungszeiten der einzelnen Bestandteile der Signalverarbeitung von Bild- und Tonsignal zu sein, bzw. um alterungsbedingte Schwankungen ausgleichen zu können, wie sie in analogen Bestandteilen der Signalverarbeitung, wie z. B. dem Verstärker 23, auftreten können, kann es vorgesehen sein, daß durch die Steuereinrichtung 4 Testsignale erzeugt werden. Diese Testsignale können beispielsweise an den Stellen B1 und T1 in die Signalverarbeitung eingespeist werden, um der Steuereinrichtung 4 die Ermittlung der Verarbeitungszeiten der einzelnen Bestandteile 11, 12, 13 sowie 21, 22, 23 zu ermöglichen.

Abweichend von dem beschriebenen Ausführungsbeispiel sind vielfältige andere Ausgestaltungen der vorliegenden Erfindung möglich. Beispielsweise können statt der zur Verzögerung der Signale verwendeten und beschriebenen Speicher 122 und 222 einstellbare Verzögerungsleitungen verwendet werden. Speicher zur Verzögerung von Bild- und/oder Tonsignalen sind beispielsweise aus der

DE 44 10 679 A1, einstellbare Verzögerungsleitungen beispielsweise aus der EP 0 452 776 A2 bekannt. Es ist auch möglich, daß nur eine Einrichtung zur zeitlichen Verzögerung vorgesehen ist, und daß diese in dem Zweig der Signalverarbeitung angeordnet ist, welche die kürzere Zeitdauer für die Signalverarbeitung benötigt. Ebenso ist es offensichtlich, daß die vorliegende Erfindung neben den eingangs aufgezählten flachen Bildwiedergabegeräten für andere Bildwiedergabegeräte verwendet werden kann.

## Patentansprüche

1. Bild- und Tonwiedergabegerät, insbesondere mit einem flachen Bildwiedergabegerät (7), mit einer Bildverarbeitungseinrichtung (10) und einer Tonverarbeitungseinrichtung (20), wobei in der Bildverarbeitungseinrichtung (10) und/oder in der Tonverarbeitungseinrichtung (20) eine Einrichtung (4) zur Zeitverzögerung (122;222) vorgesehen ist, wobei die Einrichtung zur Zeitverzögerung (122;222) unterschiedlich lange Signalverarbeitungszeiten in der Bildverarbeitungseinrichtung (10) und der Tonverarbeitungseinrichtung (20) ausgleicht,
**dadurch gekennzeichnet, dass**
mittels eines Fernbedienungsgebers (5) die Einrichtung zur Zeitverzögerung (122;222) einstellbar ist.

2. Bild- und Tonwiedergabegerät nach Anspruch 1,
**dadurch gekennzeichnet, dass**
die Einrichtung (4) zur Zeitverzögerung (122;222)stufenlos einstellbar ist.

3. Bild- und Tonwiedergabegerät nach Anspruch 1,
**dadurch gekennzeichnet, dass**
die Einrichtung (4) zur Zeitverzögerung (122;222)in Schritten von einer MilliSekunde einstellbar ist.

4. Bild- und Tonwiedergabegerät nach einem oder mehreren der vorangehenden Ansprüche **dadurch gekennzeichnet, dass**
die Einrichtung (4) zur Ermittlung unterschiedlicher Signalverarbeitungszeiten in der Bildverarbeitungseinrichtung (10) und der Tonverarbeitungseinrichtung (20) vorgesehen ist, die nach Maßgabe der vorgegebenen unterschiedlichen Signalverarbeitungszeiten die Einrichtung zur Zeitverzögerung (122;222) ansteuert.

5. Bild- und Tonwiedergabegerät nach einem oder mehreren der vorangehenden Ansprüche,
**dadurch gekennzeichnet, dass**
die Einrichtung zur Zeitverzögerung (122;222) von einem Speicher gebildet wird.

6. Bild- und Tonwiedergabegerät nach einem oder mehreren der vorangehenden Ansprüche,
**dadurch gekennzeichnet, dass**
die Einrichtung zur Zeitverzögerung (122;222) von einer einstellbaren Verzögerungsleitung gebildet wird.

7. Verfahren für den Betrieb eines Bild- und Tonwiedergabegeräts, insbesondere mit einem flachen Bildwiedergabegerät, mit einer Bildsignalverarbeitung und einer Tonsignalverarbeitung, mit nachfolgenden Schritten:
- Ermitteln einer für die Bildsignalverarbeitung benötigen Zeitdauer,
- Ermitteln einer für die Tonsignalverarbeitung benötigen Zeitdauer,
- Ermitteln einer Differenz zwischen der für die Bildsignalverarbeitung und der für die Tonsignalverarbeitung benötigen Zeitdauer,
- Zeitliche Verzögerung der Bildsignalverarbeitung um die ermittelte Differenz, falls die ermittelte Zeitdauer der Bildsignalverarbeitung kleiner als die Zeitdauer der Tonsignalverarbeitung ist, oder
- Zeitliche Verzögerung der Tonsignalverarbeitung um die ermittelte Differenz, falls die ermittelte Zeitdauer der Tonsignalverarbeitung kleiner als die Zeitdauer der Bildsignalverarbeitung ist,
**dadurch gekennzeichnet, dass**
die ermittelte Differenz über einen Fernbedienungsgeber (5) veränderbar ist.

## Claims

1. Picture and sound reproduction appliance, in particular having a flat picture-reproduction appliance (7), comprising a picture-processing device (10) and a sound-processing device (20), wherein a time delay (122;222) device (4) is provided in the picture-processing device (10) and/or the sound-processing device (20), and wherein the time delay (122;222) device equalizes signal-processing times of varying length in the picture-processing device (10) and the sound-processing device (20), **characterized in that** the time delay (122;222) device can be adjusted by means of a remote controller (5).

2. Picture and sound reproduction appliance according to Claim 1, **characterized in that** the time delay (122;222) device (4) is infinitely adjustable.

3. Picture and sound reproduction appliance according to Claim 1, **characterized in that** the time delay (122;222) device (4) is adjustable in steps of one millisecond.

4. Picture and sound reproduction appliance according to one or more of the preceding claims, **characterized in that** the device (4) is provided for determining different signal processing times in the picture-processing device (10) and the sound-processing device (20), which device controls the time delay (122;222) device as a function of the different signal-processing times presented.

5. Picture and sound reproduction appliance according to one or more of the preceding claims, **characterized in that** the time delay (122;222) device is formed by a memory.

6. Picture and sound reproduction appliance according to one or more of the preceding claims, **characterized in that** the time delay (122;222) device is formed by an adjustable delay line.

7. Method of operating a picture and sound reproduction appliance, in particular having a flat picture-reproduction appliance, a picture-signal-processing device and a sound-signal-processing device, said method comprising the following steps:
- determination of a time needed for the picture-signal processing,
- determination of a time needed for the sound-signal processing,
- determination of a difference between the time needed for the picture-signal processing and that needed for the sound-signal processing,
- time delay of the picture-signal processing by the difference determined if the picture-signal processing time determined is less than the sound-signal processing time, or
- time delay determined of the sound-signal processing by the difference determined if the sound-signal processing time is less than the picture-signal processing time,
**characterized in that** the difference determined can be altered by means of a remote controller (5).

## Revendications

1. Dispositif de reproduction d'images et de son, en particulier dans un dispositif de reproduction d'images plat (7), avec un dispositif de traitement d'images (10) et un dispositif de traitement de son (20), dans lequel, dans le dispositif de traitement d'images (10) et/ou dans le dispositif de traitement de son (20), un dispositif (4) de temporisation (122 ; 222) est prévu, dans lequel le dispositif de temporisation (122 ; 222) compense des temps de traitement de signaux longs différents dans le dispositif de traitement d'images (10) et le dispositif de traitement de son (20),
**caractérisé en ce que**
le dispositif de temporisation (122 ; 222) peut être réglé au moyen d'une télécommande (5).

2. Dispositif de reproduction d'images et de son selon la revendication 1, **caractérisé en ce que** le dispositif (4) pour la temporisation (122 ; 222) peut être réglé progressivement.

3. Dispositif de reproduction d'images et de son selon la revendication 1, **caractérisé en ce que** le dispositif (4) pour la temporisation (122 ; 222) peut être réglé selon un pas d'une milliseconde.

4. Dispositif de reproduction d'images et de son selon une ou plusieurs des revendications précédentes, **caractérisé en ce que** le dispositif (4) est prévu pour la détection de temps de traitement de signaux différents dans le dispositif de traitement d'images (10) et le dispositif de traitement de son (20), qui commande le dispositif pour la temporisation (122 ; 222) conformément aux temps de traitement de signaux différents prédéterminés.

5. Dispositif de reproduction d'images et de son selon une ou plusieurs des revendications précédentes, **caractérisé en ce que** le dispositif pour la temporisation (122 ; 222) est formé par une mémoire.

6. Dispositif de reproduction d'images et de son selon une ou plusieurs des revendications précédentes, **caractérisé en ce que** le dispositif pour la temporisation (122 ; 222) est formé par une ligne à retard réglable.

7. Procédé pour le fonctionnement d'un dispositif de reproduction d'images et de son, en particulier avec un dispositif de reproduction d'images plat, avec un traitement de signaux d'image et un traitement de signaux de son, comportant les étapes suivantes :
- détection d'une durée nécessaire pour le traitement de signaux d'image,
- détection d'une durée nécessaire pour le traitement de signaux de son,
- détection d'une différence entre la durée nécessaire pour le traitement de signaux d'image et celle pour le traitement de signaux de son,
- retard du traitement de signaux d'images de la différence détectée, au cas où la durée détectée du traitement de signaux d'image est inférieure à la durée de traitement de signaux de son, ou
- retard du traitement de signaux de son de la différence détectée, au cas où la durée détectée du traitement de signaux de son est inférieure à la durée du traitement de signaux d'images,
**caractérisé en ce que** la différence détectée peut être modifiée par l'intermédiaire d'une télécommande (5).
